# FASCICULE DE BREVET EUROPEEN

(11) **EP 3 997 353 B1**
(45) Date de publication et mention de la délivrance du brevet: **26.04.2023**
(21) Numéro de dépôt: 20750350.9
(22) Date de dépôt: 09.07.2020
(51) Int. Cl.: F16C 33/66

(54) **RECIRCULATION DE LUBRIFIANT DANS UN PALIER A ELEMENTS ROULANTS DE TURBOMACHINE**
SCHMIERMITTELRÜCKFÜHRUNG IN EINEM WÄLZLAGER FÜR EINE TURBOMASCHINE
RECIRCULATION OF LUBRICANT IN A ROLLING BEARING OF A TURBOMACHINE

(30) Priorité: 10.07.2019 FR 1907709
(43) Date de publication de la demande: 18.05.2022
(73) Titulaire: Safran Power Units, 31200 Toulouse (FR)
(72) Inventeur: COT, Serge, Marie, Gabriel, 77500 MOISSY-CRAMAYEL (FR); LOPEZ, Jean-Paul, Salvador, 77550 MOISSY-CRAMAYEL (FR); CHEVALIER, Stéphane, 77550 MOISSY-CRAMAYEL (FR)
(74) Mandataire: Gevers & Orès
(86) Numéro de dépôt international: PCT/FR2020/051247
(87) Numéro de publication internationale: WO 2021/005315

(56) Documents cités:
- EP-A1- 0 034 084

## Description

### Domaine technique de l'invention

L'invention porte sur un palier à éléments roulants pour une turbomachine, en particulier d'aéronef, ce palier comportant un circuit de recirculation de lubrifiant.

### Arrière-plan technique

Les générateurs de gaz tels que ceux utilisés pour les groupes auxiliaires de puissance aéronautiques, ou autres types de dispositifs utilisant des petites turbomachines, présentent classiquement des paliers, pour leurs arbres tournants, pourvus d'éléments roulants faisant l'objet d'une lubrification. Pour assurer cette lubrification, un système de lubrification externe est alors prévu, lequel présente une pompe, un circuit de distribution, ainsi que divers composants tels que des clapets et électrovannes. Ce système de lubrification externe dégrade les performances du moteur (puissance spécifique et fiabilité notamment) et représente une part non négligeable du coût global du moteur. Le lubrifiant (huile ou graisse) utilisé pour lubrifier un palier de ce type est injecté dans le palier et participe à sa lubrification pendant un laps de temps limité. Le lubrifiant a en effet tendance à migrer et à stagner dans des zones dites mortes. Il peut être recyclé mais est alors réinjecté dans le système de lubrification.

On a déjà proposé d'équiper un palier à éléments roulants d'un circuit de recirculation de lubrifiant , comme dans par exemple EP 0 034 084 A1. Cependant, en pratique, la recirculation de lubrifiant n'est pas fiable et n'est pas optimale.

### Résumé de l'invention

L'invention propose une solution simple, efficace et économique à ce problème au moyen d'un palier du type auto-lubrifié, c'est-à-dire qui ne nécessite pas nécessairement de système de lubrification externe.

L'invention propose ainsi avantageusement un palier à éléments roulants pour une turbomachine, en particulier d'aéronef, comportant :
- une bague interne définissant un premier chemin de roulement présentant un premier diamètre,
- une bague externe définissant un second chemin de roulement,
- une pluralité d'éléments roulants disposés entre les bagues interne et externe et aptes à rouler sur les premier et second chemins de roulement,
dans lequel le palier présente au moins un circuit en boucle de recirculation forcée de lubrifiant, ce circuit en boucle comprenant un premier circuit de recirculation comportant au moins une entrée de lubrifiant située au niveau du second chemin de roulement, et reliée par au moins une conduite réalisée dans la bague externe à au moins une sortie de lubrifiant qui débouche sur un deuxième circuit de recirculation du circuit en boucle, ce deuxième circuit de recirculation comprenant au moins une conduite réalisée dans la bague interne.

Dans le palier selon l'invention, chaque entrée de lubrifiant du premier circuit de recirculation forme un orifice débouchant sur le second chemin de roulement, les éléments roulants pouvant rouler sur cet orifice.

Cette configuration présente l'avantage de générer une recirculation du lubrifiant par effet de pompe. Cet effet de pompe est obtenu grâce au fait que le circuit débouche directement sur au moins un des chemins de roulement. Les éléments roulants roulent sur les débouchés du circuit et forcent le lubrifiant présent sur le chemin de roulement à être injecté dans l'entrée ou chaque entrée de lubrifiant. La recirculation du lubrifiant est donc activée sans besoin d'un moyen de pompage externe tel que par exemple une pompe hydraulique. Ceci permet avantageusement de réduire le nombre de composants mis en oeuvre pour la lubrification du palier, d'en réduire le coût de fonctionnement (plus besoin d'alimenter en énergie un moyen de pompage externe) et de fabrication (réduction de la complexité de montage). Pouvoir s'affranchir d'un système de pompage externe permet en outre de limiter la masse de la turbomachine.

L'invention permet de profiter de manière utile de la force centrifuge, qui dans les paliers du type auto-lubrifié de l'art antérieur a tendance à projeter le lubrifiant vers des zones mortes de la partie externe du palier qui ne tourne pas, le lubrifiant restant prisonnier de ces zones mortes dans lesquelles il stagne. La force centrifuge est d'autant plus importante que la vitesse de rotation de la partie interne du palier est élevée. En créant un circuit formant une boucle de recirculation forcée de lubrifiant ayant au moins une entrée dans la partie externe du palier, on évite la présence de zones mortes dans lesquelles le lubrifiant stagnerait.

Le palier selon l'invention peut comprendre une ou plusieurs des caractéristiques suivantes, prises isolément les unes des autres ou en combinaison les unes avec les autres :
- chaque entrée de lubrifiant du premier circuit de recirculation forme un orifice débouchant sur le second chemin de roulement ;
- au moins une sortie de lubrifiant du premier circuit de recirculation est formée par un orifice de refoulement situé à une distance d'un axe du palier inférieure ou égale au premier diamètre du premier chemin de roulement. ;
- le palier comprend en outre une cage intercalée entre les bagues et maintenant les éléments roulants espacés entre eux, ladite cage comprenant au moins une surface interne qui est apte à glisser sur une surface externe de la bague interne, et dans lequel au moins une conduite d'orientation radiale du deuxième circuit de recirculation débouche de ladite surface externe face à ladite surface interne, ladite surface interne présentant un diamètre légèrement supérieur à un diamètre de ladite surface externe de façon à ce que du lubrifiant provenant de la conduite d'orientation radiale puisse déboucher dans une cavité de logement de la cage ;
- les éléments roulants ainsi que la surface externe de la bague interne et la surface interne de la cage sont cylindriques ;
- le premier circuit de recirculation comporte au moins deux entrées de lubrifiant alignées selon une direction axiale parallèle à un axe du palier.
- le premier circuit de recirculation comprend une série de paires d'entrées de lubrifiant situées au niveau du second chemin de roulement et une série de paires de conduites associées auxdites entrées de lubrifiant, les paires de conduites étant régulièrement réparties autour d'un axe du palier, et les conduites de chaque paire s'étendant sensiblement dans un même plan passant par cet axe ;
- le premier circuit de recirculation comporte au moins deux conduites réalisées dans la bague externe et qui s'étendent de part et d'autre d'un plan médian du palier, perpendiculaire audit axe et passant sensiblement au milieu du palier ;
- les conduites de chaque paire sont symétriques par rapport à un plan médian perpendiculaire audit axe et passant sensiblement au milieu du palier ;
- chaque conduite du premier circuit de recirculation comprend une première partie s'étendant radialement vers l'extérieur depuis l'entrée de lubrifiant et prolongée par une deuxième partie qui progresse principalement en se rapprochant d'un axe du palier, cette deuxième partie aboutissant à la sortie de lubrifiant qui débouche sur le deuxième circuit de recirculation ;
- la sortie de lubrifiant est engagée dans un collecteur d'entrée de lubrifiant du deuxième circuit de recirculation formé par un évidement annulaire de la bague interne, ledit évidement annulaire présentant un fond qui débouche sur au moins une conduite du deuxième circuit de recirculation ;
- les éléments roulants sont des rouleaux, en particulier cylindriques ; ce type d'élément roulant présente l'avantage d'être utilisable à des vitesses de rotation élevées et dans des plages de température élevée. Ils sont particulièrement adaptés pour leur utilisation dans une turbomachine d'aéronef ;
- le palier comprend des systèmes d'étanchéité entre les bagues interne et externe, de part et d'autre desdits éléments roulants ;
- la bague interne ou au moins un élément solidaire en rotation de la bague interne, comprend des nervures annulaires de guidage de lubrifiant par centrifugation en direction de ladite entrée de lubrifiant, ces nervures annulaires s'étendant de part et d'autre des éléments roulants vers la bague externe.

L'invention porte également sur une turbomachine, en particulier d'aéronef, comportant au moins un palier disposant d'une ou plusieurs des caractéristiques décrites ci-avant, et dans laquelle la bague interne du palier est solidaire en rotation d'un arbre rotatif de la turbomachine tandis que la bague externe est fixée à une partie statorique de la turbomachine.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 est une représentation schématique en coupe axiale d'une partie d'un palier à éléments roulants selon un mode de réalisation de l'invention, et d'un flux de lubrifiant lors de la rotation dudit palier ;
[Fig. 2A] la figure 2A est un détail agrandi d'une coopération d'une bague interne et d'une bague externe appartenant au palier de la Fig. 1 ;
[Fig. 2B] la figure 2B est une vue en coupe d'une partie d'une bague latérale appartenant au palier de la Fig. 1 ;
[Fig. 3] la figure 3 est une vue en coupe et en perspective de la partie de palier de la Fig. 1 ;
[Fig. 4] la figure 4 est une vue en coupe et en perspective de certains éléments du palier selon le mode de réalisation.

### Description détaillée de l'invention

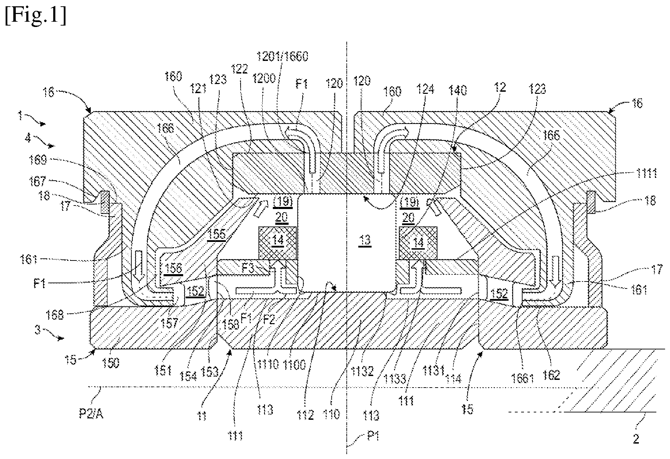

La figure 1 représente schématiquement et en coupe la partie d'un palier à effet de recirculation 1 située d'un premier côté d'un axe de rotation A du palier 1. Le palier 1 est par exemple monté sur un arbre 2.

D'une manière générale, dans la description ci-après, les termes "longitudinal" et "axial" qualifient l'orientation d'éléments structurels s'étendant selon la direction de l'axe de rotation A. Le terme "radial" qualifie une orientation d'éléments structurels s'étendant selon une direction perpendiculaire à l'axe de rotation A.

Par ailleurs, lorsque la section d'un élément annulaire est décrite, il n'est fait référence qu'à la partie se trouvant d'un premier côté de l'axe de rotation A du palier 1, l'autre partie s'obtenant par image miroir par rapport à l'axe A dans le plan des figures, par exemple.

Le palier 1 présente une bague interne 3, une bague externe 4, une pluralité d'éléments roulants 13. Les bagues interne 3 et externe 4 sont destinées à pivoter l'une par rapport à l'autre autour de l'axe de rotation A (figures 1, 2A et 3).

Ici, le palier 1 comporte encore une cage 14, deux systèmes d'étanchéité 17, ici sous forme de bagues d'étanchéité, et deux anneaux de fixation 18 (figure 1).

La bague interne 3 comporte une bague médiane 11 et deux bagues latérales 15.

La bague externe 4 comporte une bague médiane 12 et deux bagues latérales 16.

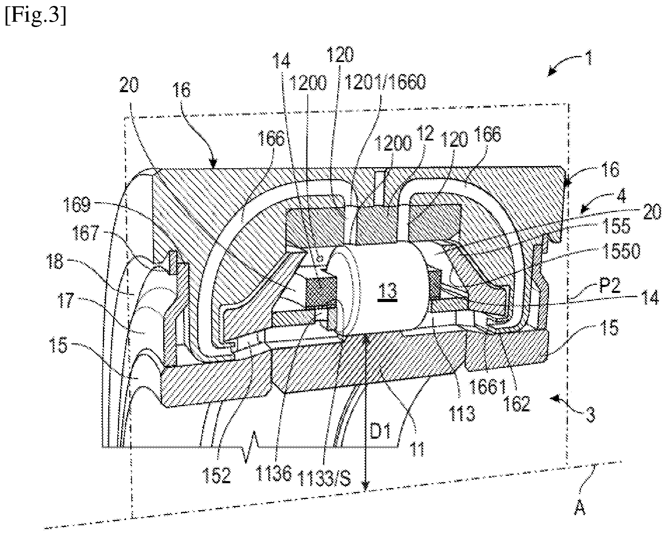

Les bagues médianes 11 et 12, ainsi que les bagues latérales 15, les bagues latérales 16, les bagues d'étanchéité 17 et les anneaux de fixation 18 ont généralement une forme annulaire, c'est-à-dire une forme de révolution autour de l'axe de rotation A (figures 1 et 3).

En outre, le palier 1 est ici conformé symétrique par rapport à un plan de symétrie P1 ou plan médian, c'est-à-dire en image miroir par rapport au plan P1. En particulier, la bague interne 3, la bague externe 4, chaque élément roulant 13 et la cage 14 sont ici prévus symétriques par rapport au plan P1 (figure 1).

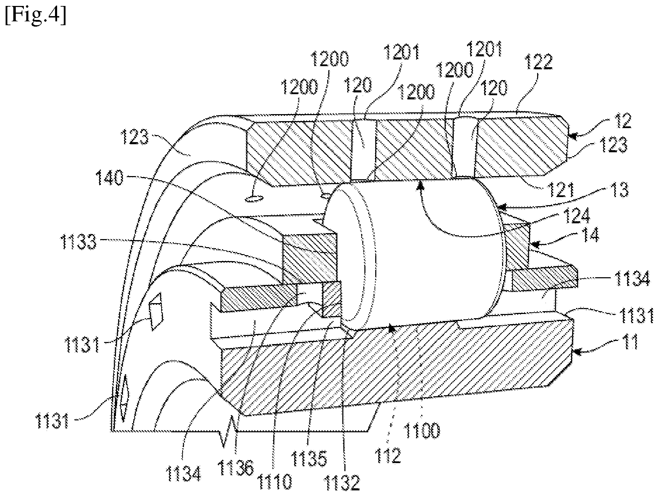

Ici, les éléments roulants 13 sont des rouleaux, en particulier cylindriques. La cage 14 délimite une pluralité de logements 140 dans chacun desquels est respectivement logé un élément roulant 13 (figures 1 et 4). La cage 14 a pour rôle de maintenir les éléments roulants 13 espacés entre eux.

La bague médiane 11 présente une section médiane 110 et deux sections latérales 111 (figure 1). Les sections médiane 110 et latérales 111 sont chacune, en tant que sous-parties de la bague médiane 11, de forme généralement annulaire. La section médiane 110 a un diamètre extérieur moindre que les sections latérales 111. Les sections médiane 110 et latérales 111 délimitent entre elles une piste interne ou premier chemin de roulement 112, sur laquelle les éléments roulants 13 sont destinés à se déplacer par roulement. Ici, le premier chemin de roulement 112 est délimité par une surface annulaire 1100 cylindrique, d'orientation axiale (figures 1 et 4). Deux surfaces planes 1110, d'orientation radiale, situées de part et d'autre de la partie d'orientation axiale 1100, servent de butées de positionnement axial (centrage) des éléments roulants 13. Les flancs des éléments roulants 13 peuvent buter avec glissement contre l'une ou l'autre des deux surfaces 1110. Des conduites 113 sont aménagées dans la bague médiane 11. Plus précisément, les conduites 113 traversent la bague médiane 11 de manière à déboucher ici chacun en trois orifices 1131, 1132 et 1133. Pour raison de simplicité, il n'est fait ici mention que d'une (première) conduite 113, une deuxième conduite 113 symétrique par rapport au plan P1 présente une configuration similaire. En outre, d'autres conduites 113 similaires sont ménagées dans la bague 11 à distance angulaire les unes des autres autour de l'axe de rotation A.

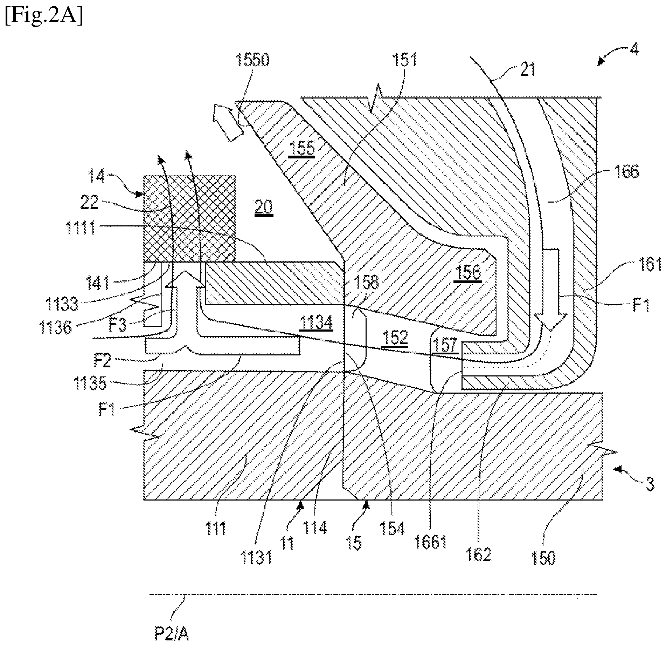

L'orifice 1131 est ménagé sur une face d'extrémité 114 de la bague médiane 11 (figures 1 et 2A). Un orifice 1132 est ménagé sur une surface de chaque côté du premier chemin de roulement 112 (figures 1, 2A et 4). Plus précisément, l'orifice 1132 est ici ménagé au niveau d'un bord de la surface annulaire 1100, et de telle façon que les éléments roulants 13 puissent rouler sur lui afin que du lubrifiant présent à la surface des éléments roulants et sur le premier chemin de roulement 112 soit forcé à entrer dans l'orifice 1132. L'orifice 1132 forme donc une entrée de lubrifiant. L'orifice 1133 est un orifice de refoulement, c'est-à-dire formant une sortie de lubrifiant. La sortie de lubrifiant 1133 est ménagée sur une surface cylindrique externe 1111 qui délimite extérieurement les sections latérales 111 de la bague 11 (figures 1 et 2A). Les conduites 113 peuvent être sous-divisées en sous-conduites 1134, 1135 et 1136 (figure 2A). Les sous-conduites 1134 et 1135 sont ici d'orientation axiale. La sous-conduite 1136 est ici d'orientation radiale. Les sous-conduites 1134 et 1135 sont alignées l'une avec l'autre. La sous-conduite 1136 s'étend transversalement aux sous-conduites 1134 et 1135. Les sous-conduites 1134, 1135 et 1136 sont en communication fluidique entre elles, respectivement depuis les orifices 1131, 1132 et 1133.

La bague médiane 12 présente une pluralité de conduites 120, une surface annulaire interne 121 et une surface annulaire externe 122 (figures 1 et 4). Les conduites 120 sont ici d'orientation radiale. Chaque conduite 120 débouche sur la surface annulaire interne 121 par un orifice interne 1200 et sur la surface annulaire externe 122 par un orifice externe 1201.

La bague médiane 12 est ici délimitée axialement par deux faces d'extrémité 123, préférentiellement planes.

Une partie médiane 124 de la surface annulaire interne 121 forme une piste externe, ou second chemin de roulement, sur laquelle les éléments roulants 13 sont en contact et sont destinés à se déplacer par roulement. Les orifices 1200 sont ménagés sur le second chemin de roulement 124, de telle façon que les éléments roulants 13 puissent rouler sur eux afin que du lubrifiant soit forcé à entrer dans ces orifices. Les orifices 1200 forment donc des entrées de lubrifiant. Si les éléments roulants 13 sont des rouleaux, le chemin de roulement 124 est cylindrique. Avantageusement, chaque rouleau peut avoir une forme très légèrement bombée de part et d'autre d'une zone cylindrique de contact du rouleau sur le second chemin de roulement 124. Cette forme bombée permet d'avoir localement sur le rouleau un diamètre très légèrement inférieur au diamètre du rouleau, défini comme le diamètre de sa zone cylindrique de contact. Cette zone cylindrique de contact peut être symétrique par rapport au plan P1, et sa longueur peut être comprise entre un quart et deux tiers de la longueur du rouleau.

De préférence, les orifices 1200 sont ménagés de part et d'autre de la zone cylindrique de contact sur le second chemin de roulement 124, de telle sorte que les rouleaux ne viennent pas en contact ou très peu en contact avec les deux parties annulaires du second chemin de roulement 124 sur lesquelles sont ménagés les orifices 1200. En effet, les formes très légèrement bombées des rouleaux sont prévues de façon à ce qu'il n'y ait pas de contact, ou en alternative un contact avec une pression de contact très limitée, entre un rouleau et le bord d'un orifice 1200. On évite ainsi par exemple de générer un départ d'écaillage au niveau d'un orifice 1200, alors qu'un tel écaillage pourrait se produire en cas de forte pression de contact du fait des fortes contraintes localisées qui se développeraient au niveau des orifices 1200.

Ainsi, dans le cas où les éléments roulants 13 sont des rouleaux, le fait que ces éléments roulants puissent rouler sur les orifices 1200 n'implique pas nécessairement un contact entre les éléments roulants et les deux parties annulaires du second chemin de roulement 124 sur lesquelles sont ménagés les orifices. Néanmoins, dans tous les cas, le passage d'un rouleau sur un orifice s'effectue avec contact ou un quasi contact entre le rouleau et le chemin de roulement 124 au niveau de l'orifice, de telle sorte que l'effet de pompage de l'huile procuré n'est pas significativement affecté par l'éventuelle absence de contact (quasi contact).

Les éléments 15 à 18 sont ici identiques par paire respective. Chaque élément 15 à 18 des paires d'éléments 15 à 18 est disposé en symétrie de l'autre élément 15 à 18 par rapport au plan P1 transversal à l'axe de rotation A (Fig. 1).

Les bagues latérales 15 présentent une partie interne 150 et une partie externe 151, solidaires en rotation. Les parties interne 150 et externe 151 sont toutes deux sensiblement annulaires. Des conduites 152 sont formées par des passages à travers la jonction entre les parties interne 150 et externe 151. Les conduites 152 sont ici d'orientation proche d'une direction axiale, non limitativement, avec préférablement une inclinaison d'un certain angle, par exemple inférieur à 20°, par rapport à la direction axiale de façon à ce que la centrifugation du lubrifiant passant dans les conduites 152 force la circulation du lubrifiant vers les conduites 113 qui traversent la bague médiane 11. La partie interne 150 et la partie externe 151 sont faites ici de corps l'une avec l'autre (figures 1 et 2A), ce qui peut être réalisé avantageusement par fabrication additive afin notamment de former des conduites 152 pouvant présenter des courbures complexes. La partie externe présente deux nervures annulaires 155 et 156 sous forme de nervures annulaires. Vue en section, la nervure annulaire 155 forme ici un bec s'étendant en biais à l'opposé de la partie interne 150, c'est-à-dire en s'éloignant de la partie interne 150, à la fois radialement vers l'extérieur et axialement. Comme il sera décrit plus loin, la nervure annulaire 155 a pour rôle d'assurer un guidage de lubrifiant par centrifugation. Vue en section, l'autre nervure annulaire 156 forme ici un bec s'étendant axialement, sensiblement parallèlement à la partie interne 150. Les nervures annulaires 155 et 156 s'étendent axialement sensiblement à l'opposé l'une de l'autre. Un premier évidement annulaire 157, en communication fluidique avec les conduites 152, est délimité entre la nervure annulaire 156 et la partie interne 150. Ce premier évidement annulaire 157 forme un collecteur d'entrée de lubrifiant du deuxième circuit de recirculation 22. Un deuxième évidement annulaire 158, en communication fluidique avec les conduites 152, est délimité entre la nervure annulaire 155 et la partie interne 150. Le deuxième évidement annulaire 158 débouche par un orifice 154, qui est ici une ouverture annulaire, sur une face d'extrémité 153, ici plane.

Les bagues latérales 16 de la bague externe 4 sont ici les éléments disposés radialement les plus extérieurement dans le palier 1 (figure 1).

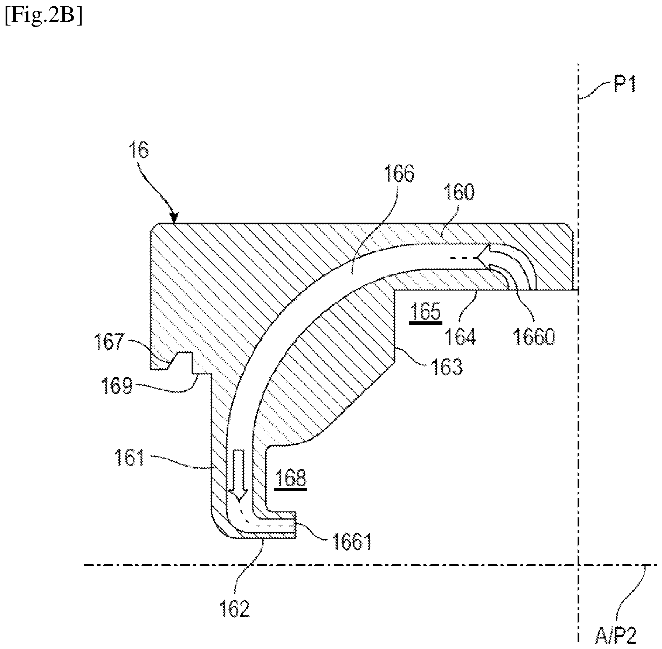

Chaque bague latérale 16 présente une portion axiale 160 et une portion radiale 161 (figures 1 et 2B). Les portions axiale 160 et radiale 161 sont généralement disposées en L l'une par rapport à l'autre, la portion radiale 161 s'étendant radialement vers l'intérieur depuis la portion axiale 160. Un rebord annulaire 162 s'étend toutefois axialement de la portion radiale 161 dans le même sens que la portion axiale 160.

Les bagues latérales 16 présentent une surface annulaire 164, délimitant vers l'intérieur la portion axiale 160, et une surface radiale 163, transversale à la surface annulaire 164. Les surfaces 163 et 164 délimitent un espace annulaire 165 destiné à loger la bague médiane 12 (figure 2B). Les surfaces 163 et 164 de la bague latérale 16 forment alors butée pour les surfaces 123 et 122 de la bague médiane 12 (figure 1).

Chaque bague latérale 16 comporte une pluralité de conduites 166. Chaque conduite 166 débouche sur la surface 164 par un orifice d'admission 1660 (figure 2B). Les conduites 166 s'étendent à travers la bague latérale respective 16 depuis les orifices d'admission 1660, et plus précisément à travers la portion axiale 160, la portion radiale 161 puis le rebord annulaire 162, jusqu'à un orifice de refoulement 1661.

En outre, les bagues latérales 16 présentent chacune un espace annulaire 168 délimité radialement et intérieurement par le rebord annulaire 162, et axialement par la portion radiale 161. Chaque espace annulaire 168 est destiné à loger la nervure annulaire 156 de la bague latérale 15 correspondante (figure 1).

Une cavité 20 est délimitée entre la bague médiane 11, la bague médiane 12, les bagues latérales 15, les bagues latérales 16 et les bagues d'étanchéité 17 (figure 1). La cavité 20 forme un volume fermé étanche aux fluides et dans lequel est logé l'ensemble formé par les éléments roulants 13 et la cage 14, dans un bain de lubrifiant 19.

Dans le palier 1, les bagues d'étanchéité sont logées radialement entre un épaulement 169 de la bague 16 et la partie interne 150 de la bague 15, et au moins partiellement contre la portion radiale 161 (figures 1 et 3). Les bagues d'étanchéité 17 garantissent l'étanchéité de la cavité 20 et y maintiennent confiné le lubrifiant 19. Le palier 1 est ainsi lubrifié en circuit fermé.

Sur les bagues latérales 16, une gorge 167, ouverte en direction de l'axe de rotation A, est destinée à recevoir un anneau de fixation 18 (figures 1, 2B et 3). L'anneau de fixation 18 sert alors à maintenir les bagues d'étanchéité 17 sur les bagues latérales 16

La relation entre eux des éléments décrits ci-dessus et le fonctionnement du palier sont maintenant décrits plus en détail.

Dans le mode de réalisation représenté dans lequel le palier 1 est monté sur l'arbre 2 (figure 1), la bague interne 3 forme un ensemble mobile, tandis que la bague externe 4 forme, non limitativement, un ensemble fixe, par exemple fixé à un organe fixe de référence, non représenté ici, d'un aéronef.

Les éléments roulants 13 sont pris en sandwich radialement entre la bague médiane 11 de la bague interne 3 et la bague médiane 12 de la bague externe 4 (figures 1 et 3). Les éléments roulants 13 sont alors en contact avec le premier chemin de roulement 112 et le second chemin de roulement 124, et aptes à rouler sur ceux-ci. Le chemin de roulement 124 est donc cylindrique de sorte que les éléments roulants 13 qui sont ici des rouleaux puissent rouler dessus sans perte de contact au moins au niveau d'une zone cylindrique de contact du rouleau sur le second chemin de roulement 124.

Dans le palier 1, la bague médiane 11 est prise en sandwich axialement entre les deux bagues latérales 15 (figures 1 et 3).

Les nervures annulaires 155 s'étendent alors vers la bague médiane 12 et les éléments roulants 13. Plus précisément, les nervures annulaires 155 présentent une surface inclinée 1550 (figure 2A). La surface inclinée 1550 fait face aux éléments roulants 13 et s'étend radialement vers l'extérieur et axialement en direction de l'entrée de lubrifiant 1200 (figure 3). La surface inclinée 1550 assiste dans le guidage du lubrifiant 19 lors de la mise en rotation du palier 1 et agit donc en support de la centrifugation du lubrifiant 19. En outre, les nervures annulaires 155 sont configurées pour limiter le volume de la cavité 20 et ainsi éviter la présence de zones mortes dans lesquelles le lubrifiant 19 s'accumulerait.

Comme décrit ci-dessus, la bague médiane 12 est logée dans l'espace 165 défini par les bagues latérales 16.

En outre, les bagues latérales 16 sont disposées de telle sorte que les nervures annulaires 156 des bagues latérales 15 viennent respectivement se loger dans leur espace annulaire 168 respectif de manière à pouvoir s'y déplacer en rotation.

Les deux bagues d'étanchéité 17 sont respectivement disposées aux extrémités axiales du palier 1, entre les bagues latérales 16 de la bague externe 4 et les bagues latérales mobiles 15 (figure 3).

Les anneaux de fixation 18, maintiennent ensuite les bagues d'étanchéité en place, permettant alors de garantir l'étanchéité du palier 1.

Dans cette configuration, les conduites décrites ci-dessus sont agencées entre elles de la manière suivante (voir figure 1) :
- les conduites 120 de la bague médiane 12 sont en communication fluidique avec les conduites 166 des bagues latérales 16. Autrement dit, l'orifice 1201 est abouché à l'orifice 1660 ;
- les conduites 166 sont en communication fluidique avec les conduites 152 des bagues internes 15. Autrement dit ici, les conduites 166 débouchent du rebord annulaire 162 par les orifices 1661 dans l'évidement annulaire 157 ;
- le premier évidement annulaire 157, les conduites 152 et le deuxième évidement annulaire 158 sont en communication fluidique, tel que mentionné plus haut ;
- les conduites 152 sont en communication fluidique avec les sous-conduites 1134, 1135 et 1136 de la bague médiane 11. Autrement dit, le deuxième évidement annulaire 158 est abouché aux orifices 1131 (figure 2A).

Lorsque l'arbre 2 est mis en rotation, la bague médiane 11, montée solidairement de celui-ci adopte ici le même mouvement de rotation, c'est-à-dire qu'elle pivote autour de l'axe A à la même vitesse angulaire que l'arbre 2.

Les éléments roulants 13 se déplacent alors en roulant sur le premier chemin de roulement 112 et sur le deuxième chemin de roulement 124. Ce faisant, une surface cylindrique interne 141 de la cage 14 glisse ici sur la surface cylindrique externe 1111 de la bague interne 3 (figure 2A). Les éléments roulants 13 roulent chacun autour de leur axe de rotation propre (non représenté), parallèle à l'axe de rotation A si les éléments roulants sont des rouleaux cylindriques, tout en suivant une course annulaire autour de la bague médiane 11.

Lors de cette course annulaire, les éléments roulants 13 franchissent les orifices 1200, et plus précisément roulent sur le pourtour de ces orifices 1200, c'est-à-dire qu'ils passent sur les entrées de lubrifiant (figures 1, 3 et 4). Les éléments roulants 13 contraignent alors le lubrifiant 19 et le forcent à pénétrer dans les conduites 120 via les entrées de lubrifiant 1200.

De manière similaire, les éléments roulants 13 passent sur les entrées de lubrifiant 1132 de la bague médiane 11. Les éléments roulants 13 contraignent alors le lubrifiant 19 et le forcent à pénétrer dans les conduites 113, et plus précisément dans les sous-conduites 1135, via les entrées de lubrifiant 1132. Le passage des éléments roulants 13 sur les entrées de lubrifiant 1200 et 1132 a donc pour effet de créer un effet de pompe. Cet effet de pompe met à profit la cinématique des éléments roulants 13 pour entraîner le lubrifiant 19 dans une dynamique de circulation auto-entretenue, permettant de lubrifier les composants du palier 1 tant que la rotation de la bague interne 3 se poursuit. Ce phénomène intervient à la fois sur la bague médiane 11, grâce aux entrées de lubrifiant 1132 positionnés en fond de premier chemin de roulement 112, et sur la bague médiane 12, grâce aux entrées de lubrifiant 1200 percées en périphérie de l'ensemble mobile 3.

L'effet de pompe précité génère des flux de lubrifiant F1 et F2.

Un premier flux F1 de lubrifiant est généré par le passage des éléments roulants 13 sur les entrées de lubrifiant 1200 (figures 1 et 2A). Le flux F1 circule successivement dans les conduites 120, 166, l'évidement 157, la conduite 152, l'évidement 158 et la sous-conduite 1134 (figure 1).

Un deuxième flux F2 de lubrifiant est généré par le passage des éléments roulants 13 sur les entrées de lubrifiant 1132. Le flux F2 circule dans la sous-conduite 1135.

Les conduites 120, 166, l'évidement 157, la conduite 152, l'évidement 158 et la sous-conduite 1134, avec la sous-conduite 1136 appartiennent alors à un premier circuit de recirculation 21 de lubrifiant (figure 2A). Le premier circuit de recirculation comprend ici, plus particulièrement, une série de paires de conduites 120, 166, 152, 1134, 1136, lesquelles sont régulièrement réparties autour de l'axe A du palier et s'étendent sensiblement dans le même plan P2 passant par l'axe A (figure 3). Une première conduite 120, 166, 152, 1134, 1136 s'étend depuis une première entrée de lubrifiant 1200 située sur le second chemin de roulement 124 jusqu'à une première sortie de lubrifiant 1133 située, comme illustré ici, à proximité du premier chemin de roulement 112 ou, en variante non illustrée, sur ce premier chemin 112. Une seconde conduite 120, 166, 152, 1134, 1136, symétrique à la première décrite ci-dessus par rapport au plan P1, s'étend depuis une seconde entrée de lubrifiant 1200 située sur ledit second chemin de roulement 124 jusqu'à une seconde sortie de lubrifiant 1133 située, comme illustré ici, à proximité du premier chemin de roulement 112, ou, en variante non illustrée, à proximité de ce premier chemin 112.

La sous-conduite 1135 et la sous-conduite 1136 forment un deuxième circuit de recirculation 22 de lubrifiant (figure 2A).

Les flux F1 et F2 se rejoignent en un flux commun F3 de lubrifiant à la jonction des sous-conduites 1134 et 1135. Le flux F3 circule radialement vers l'extérieur dans la bague médiane 11 de la bague interne 3. Le flux F3 débouche alors par la sortie de lubrifiant 1133 dans la cavité 20, et lubrifie alors directement la cage 14. La génération des flux F1 et F2 génère un appel auto-alimenté de lubrifiant au niveau des chemins de roulement 112 et 124 et le cycle de recirculation du lubrifiant se poursuit de lui-même. Les circuits de recirculation 21 et 22 sont donc auto-alimentés lors de la mise en rotation du palier 1.

Les circuits de recirculation 21 et 22 sont ici aménagés à la fois dans les bagues médianes 11 et 12, et dans les bagues latérales 16 et 15.

Les circuits de recirculation 21 et 22 forment ainsi des circuits en boucle de recirculation forcée de lubrifiant.

De préférence, les bagues latérales 16 et/ou les bagues latérales 15 et/ou la bague médiane 11 est/sont réalisé(e/s) par fabrication additive. Ceci permet notamment de fabriquer sans difficulté majeure les circuits de recirculation 21 et 22, qui sont d'une extrême complexité en raison de leurs multiples conduites courbes.

Le palier 1 décrit ci-dessus est notamment prévu pour une mise en oeuvre dans le domaine aéronautique tel que dans les turbines à gaz (turbomachines, propulseurs, groupes auxiliaires de puissance).

Le lubrifiant 19 se liquéfie de manière plus ou moins prononcée sous l'effet de la température, cet état moins visqueux permet d'amorcer l'effet de pompe et ainsi d'activer la recirculation du lubrifiant au travers du palier 1.

Le lubrifiant 19 est une graisse ou un lubrifiant liquide pouvant être une huile. De préférence, le lubrifiant 19 choisi est une graisse résistante à haute température.

En variantes non représentées, les éléments roulants 13 peuvent être des billes ou des rouleaux coniques, plutôt que des rouleaux cylindriques. Dans le cas de billes, la surface du second chemin de roulement 124 est adaptée pour le contact avec ces éléments sphériques. Le second chemin de roulement présente alors une section en arc de cercle. Alternativement ou cumulativement, dans le cas de billes, la surface du premier chemin de roulement 112 est adaptée de manière analogue et peut présenter une section en arc de cercle.

## Revendications

1. Palier à éléments roulants pour une turbomachine, en particulier d'aéronef, comportant :
- une bague interne (3) définissant un premier chemin de roulement (112) présentant un premier diamètre (D1),
- une bague externe (4) définissant un second chemin de roulement (124),
- une pluralité d'éléments roulants (13) disposés entre les bagues interne (3) et externe (4) et aptes à rouler sur les premier et second chemins de roulement (112 ; 124),
dans lequel le palier présente au moins un circuit en boucle (21, 22) de recirculation forcée de lubrifiant, ce circuit en boucle comprenant un premier circuit de recirculation (21) comportant au moins une entrée de lubrifiant (1200) située au niveau du second chemin de roulement (124), et reliée par au moins une conduite (120, 166) réalisée dans la bague externe (4) à au moins une sortie de lubrifiant (1661) qui débouche sur un deuxième circuit de recirculation (22) du circuit en boucle (21, 22), ce deuxième circuit de recirculation (22) comprenant au moins une conduite (152, 1134, 1136 ; 1135, 1136) réalisée dans la bague interne (3),
**caractérisé en ce que** chaque entrée de lubrifiant (1200) du premier circuit de recirculation (21) forme un orifice débouchant sur le second chemin de roulement (124), les éléments roulants (13) pouvant rouler sur cet orifice.

2. Palier selon la revendication précédente, dans lequel au moins une sortie de lubrifiant du premier circuit de recirculation (21) est formée par un orifice de refoulement (1661) situé à une distance d'un axe (A) du palier inférieure ou égale au premier diamètre (D1) du premier chemin de roulement (112).

3. Palier selon l'une des revendications précédentes, dans lequel il comprend en outre une cage (14) intercalée entre les bagues (3 ; 4) et maintenant les éléments roulants (13) espacés entre eux, ladite cage (14) comprenant au moins une surface interne (141) qui est apte à glisser sur une surface externe (1111) de la bague interne (3), et dans lequel au moins une conduite d'orientation radiale (1136) du deuxième circuit de recirculation (22) débouche de ladite surface externe (1111) face à ladite surface interne (141), ladite surface interne (141) présentant un diamètre légèrement supérieur à un diamètre de ladite surface externe (1111) de façon à ce que du lubrifiant provenant de la conduite d'orientation radiale (1136) puisse déboucher dans une cavité (20) de logement de la cage (14).

4. Palier selon la revendication 3, dans lequel les éléments roulants (13) ainsi que la surface externe (1111) de la bague interne (3) et la surface interne (141) de la cage (14) sont cylindriques.

5. Palier selon l'une des revendications précédentes, dans lequel le premier circuit de recirculation (21) comporte au moins deux entrées de lubrifiant (1200) alignées selon une direction axiale parallèle à un axe (A) du palier.

6. Palier selon l'une des revendications précédentes, dans lequel le premier circuit de recirculation (21) comprend une série de paires d'entrées de lubrifiant (1200) situées au niveau du second chemin de roulement (124) et une série de paires de conduites (120, 166) associées auxdites entrées de lubrifiant (1200), les paires de conduites (120, 166) étant régulièrement réparties autour d'un axe (A) du palier, et les conduites (120, 166) de chaque paire s'étendant sensiblement dans un même plan (P2) passant par cet axe (A).

7. Palier selon l'une des revendications précédentes, dans lequel le premier circuit de recirculation (21) comporte au moins deux conduites (120, 166) réalisées dans la bague externe (4) et qui s'étendent de part et d'autre d'un plan médian (P1) du palier, perpendiculaire audit axe (A) et passant sensiblement au milieu du palier.

8. Palier selon la revendication 6 ou 7, dans lequel les conduites (120, 166) de chaque paire sont symétriques par rapport à un plan médian (P1) perpendiculaire audit axe (A) et passant sensiblement au milieu du palier.

9. Palier selon l'une des revendications précédentes, dans lequel chaque conduite (120, 166) du premier circuit de recirculation (21) comprend une première partie (120) s'étendant radialement vers l'extérieur depuis l'entrée de lubrifiant (1200) et prolongée par une deuxième partie (166) qui progresse principalement en se rapprochant d'un axe (A) du palier, cette deuxième partie (166) aboutissant à la sortie de lubrifiant (1661) qui débouche sur le deuxième circuit de recirculation (22) .

10. Palier selon la revendication précédente, dans lequel la sortie de lubrifiant (1661) est engagée dans un collecteur d'entrée de lubrifiant du deuxième circuit de recirculation (22) formé par un évidement annulaire (157) de la bague interne (3), ledit évidement annulaire (157) présentant un fond qui débouche sur au moins une conduite (152) du deuxième circuit de recirculation (22).

11. Palier selon l'une des revendications précédentes, dans lequel les éléments roulants (13) sont des rouleaux, en particulier cylindriques.

12. Palier selon l'une des revendications précédentes, dans lequel le palier comprend des systèmes d'étanchéité (17) entre les bagues interne (3) et externe (4), de part et d'autre desdits éléments roulants (13).

13. Palier selon l'une des revendications précédentes, dans lequel la bague interne (3) ou au moins un élément solidaire en rotation (151) de la bague interne (3), comprend des nervures annulaires de guidage de lubrifiant par centrifugation (155) en direction de ladite entrée de lubrifiant (1200), ces nervures annulaires (155) s'étendant de part et d'autre des éléments roulants (13) vers la bague externe (4).

14. Turbomachine, en particulier d'aéronef, comportant au moins un palier selon l'une des revendications précédentes, et dans laquelle la bague interne (3) du palier est solidaire en rotation d'un arbre rotatif de la turbomachine tandis que la bague externe (4) est fixée à une partie statorique de la turbomachine.

## Patentansprüche

1. Wälzlager für eine Turbomaschine, insbesondere eines Luftfahrzeugs, umfassend:
- einen Innenring (3), der einen ersten Wälzweg (112) definiert, der einen ersten Durchmesser (D1) aufweist,
- einen Außenring (4), der einen zweiten Wälzweg (124) definiert,
- eine Vielzahl von Wälzelementen (13), die zwischen dem Innen- (3) und dem Außenring (4) angeordnet sind und imstande sind, auf dem ersten und dem zweiten Wälzweg (112; 124) zu rollen,
wobei das Lager mindestens einen geschlossenen Kreislauf (21, 22) zur gezwungenen Rückführung von Schmiermittel umfasst, wobei dieser geschlossene Kreislauf einen ersten Rückführungskreislauf (21) umfasst, der mindestens einen Schmiermitteleingang (1200) umfasst, der sich am zweiten Wälzweg (124) befindet und über mindestens eine im Außenring (4) hergestellte Leitung (120, 166) mit mindestens einem Schmiermittelausgang (1661) verbunden ist, der in einen zweiten Rückführungskreislauf (22) des geschlossenen Kreislaufs (21, 22) mündet, wobei dieser zweite Rückführungskreislauf (22) mindestens eine im Innenring (3) hergestellte Leitung (152, 1134, 1136; 1135, 1136) umfasst,
**dadurch gekennzeichnet, dass** jeder Schmiermitteleingang (1200) des ersten Rückführungskreislaufs (21) eine Öffnung bildet, die in den zweiten Wälzweg (124) mündet, wobei die Wälzelemente (13) auf dieser Öffnung rollen können.

2. Lager nach dem vorstehenden Anspruch, wobei mindestens ein Schmiermittelausgang des ersten Rückführungskreislaufs (21) durch eine Rückweisungsöffnung (1661) gebildet ist, die sich in einem Abstand von einer Achse (A) des Lagers befindet, der kleiner oder gleich dem ersten Durchmesser (D1) des ersten Wälzwegs (112) ist.

3. Lager nach einem der vorstehenden Ansprüche, wobei es weiter einen Käfig (14) umfasst, der zwischen den Ringen (3; 4) eingefügt ist und die Wälzelemente (13) voneinander beabstandet hält, wobei der Käfig (14) mindestens eine Innenfläche (141) umfasst, die imstande ist, auf einer Außenfläche (1111) des Innenrings (3) zu gleiten, und wobei mindestens eine radial ausgerichtete Leitung (1136) des zweiten Rückführungskreislaufs (22) sich von der Außenfläche (1111) öffnet, die der Innenfläche (141) zugewandt ist, wobei die Innenfläche (141) einen etwas größeren Durchmesser aufweist als ein Durchmesser der Außenfläche (1111), sodass Schmiermittel, das aus der radial ausgerichteten Leitung (1136) stammt, in einen Aufnahmehohlraum (20) des Käfigs (14) münden kann.

4. Lager nach Anspruch 3, wobei die Wälzelemente (13) sowie die Außenfläche (1111) des Innenrings (3) und die Innenfläche (141) des Käfigs (14) zylindrisch sind.

5. Lager nach einem der vorstehenden Ansprüche, wobei der erste Rückführungskreislauf (21) mindestens zwei Schmiermitteleingänge (1200) aufweist, die in einer axialen Richtung parallel zu einer Achse (A) des Lagers ausgerichtet sind.

6. Lager nach einem der vorstehenden Ansprüche, wobei der erste Rückführungskreislauf (21) eine Reihe von Schmiermitteleingangspaaren (1200), die sich am zweiten Wälzweg (124) befinden, und eine Reihe von Leitungspaaren (120, 166), die den Schmiermitteleingängen (1200) zugeordnet sind, umfasst, wobei die Leitungspaare (120, 166) regelmäßig um eine Achse (A) des Lagers herum verteilt sind und die Leitungen (120, 166) jedes Paars sich im Wesentlichen in einer gleichen Ebene (P2) erstrecken, die durch diese Achse (A) verläuft.

7. Lager nach einem der vorstehenden Ansprüche, wobei der erste Rückführungskreislauf (21) mindestens zwei Leitungen (120, 166) umfasst, die im Außenring (4) hergestellt sind und die sich beiderseits einer mittleren Ebene (P1) des Lagers erstrecken, die senkrecht zur Achse (A) ist und im Wesentlichen durch die Mitte des Lagers verläuft.

8. Lager nach Anspruch 6 oder 7, wobei die Leitungen (120, 166) jedes Paars in Bezug auf eine mittlere Ebene (P1), die senkrecht zur Achse (A) ist und im Wesentlichen durch die Mitte des Lagers verläuft, symmetrisch sind.

9. Lager nach einem der vorstehenden Ansprüche, wobei jede Leitung (120, 166) des ersten Rückführungskreislaufs (21) einen ersten Teil (120) umfasst, der sich ausgehend vom Schmiermitteleingang (1200) radial nach außen erstreckt und durch einen zweiten Teil (166) verlängert wird, der hauptsächlich dadurch vorrückt, dass er sich einer Achse (A) des Lagers annähert, wobei dieser zweite Teil (166) zum Schmiermittelausgang (1661) führt, der in den zweiten Rückführungskreislauf (22) mündet.

10. Lager nach dem vorstehenden Anspruch, wobei der Schmiermittelausgang (1661) in einen Auffang des Schmiermitteleingangs des zweiten Rückführungskreislaufs (22) eingreift, der durch eine ringförmige Aussparung (157) des Innenrings (3) gebildet wird, wobei die ringförmige Aussparung (157) einen Boden aufweist, der in mindestens eine Leitung (152) des zweiten Rückführungskreislaufs (22) mündet.

11. Lager nach einem der vorstehenden Ansprüche, wobei die Wälzelemente (13) Walzen sind, insbesondere zylindrische.

12. Lager nach einem der vorstehenden Ansprüche, wobei das Lager Dichtungssysteme (17) zwischen dem Innen- (3) und dem Außenring (4) beiderseits der Wälzelemente (13) umfasst.

13. Lager nach einem der vorstehenden Ansprüche, wobei der Innenring (3) oder mindestens ein drehfestes Element (151) mit dem Innenrings (3) ringförmige Rippen zur Führung von Schmiermittel durch Zentrifugierung (155) in Richtung des Schmiermitteleingangs (1200) umfasst, wobei diese ringförmigen Rippen (155) sich beiderseits der Wälzelemente (13) zum Außenring (4) hin erstrecken.

14. Turbomaschine, insbesondere eines Luftfahrzeugs, umfassend mindestens ein Lager nach einem der vorstehenden Ansprüche, und wobei der Innenring (3) des Lagers drehfest mit einer drehbaren Welle der Turbomaschine ist, wohingegen der Außenring (4) an einem Ständerteil der Turbomaschine befestigt ist.

## Claims

1. A rolling-element bearing for a turbomachine, in particular for an aircraft, comprising:
- an internal ring (3) defining a first raceway (112) having a first diameter (D1),
- an external ring (4) defining a second raceway (124),
- a plurality of rolling-elements (13) disposed between the internal (3) and external (4) rings and adapted to roll on the first and second raceways (112; 124),
wherein the bearing has at least one loop circuit (21, 22) for forced recirculation of lubricant, this loop circuit comprising a first recirculation circuit (21) comprising at least one lubricant inlet (1200) located at the level of the second raceway (124) and connected by at least one duct (120, 166) created in the external ring (4) to at least one lubricant outlet (1661) which opens onto a second recirculation circuit (22) of the loop circuit (21, 22), this second recirculation circuit (22) comprising at least one duct (152, 1134, 1136; 1135, 1136) created in the internal ring (3),
**characterised in that** each lubricant inlet (1200) of the first recirculation circuit (21) forms an orifice opening onto the second raceway (124), the rolling-elements (13) being able to roll over this orifice.

2. The bearing according to the preceding claim, wherein at least one lubricant outlet of the first recirculation circuit (21) is formed by a discharge orifice (1661) located at a distance from an axis (A) of the bearing less than or equal to the first diameter (D1) of the first raceway (112).

3. The bearing according to one of the preceding claims, wherein it further comprises a cage (14) interposed between the rings (3; 4) and holding the rolling-elements (13) spaced apart, said cage (14) comprising at least one internal surface (141) which is adapted to slide on an external surface (1111) of the internal ring (3), and wherein at least one radially oriented duct (1136) of the second recirculation circuit (22) opens from said external surface (1111) facing said internal surface (141), said internal surface (141) having a diameter slightly greater than a diameter of said external surface (1111) so that lubricant coming from the radially oriented duct (1136) can open into a cavity (20) of the housing of the cage (14).

4. The bearing according to claim 3, wherein the rolling-elements (13) as well as the external surface (1111) of the internal ring (3) and the internal surface (141) of the cage (14) are cylindrical.

5. The bearing according to any of the preceding claims, wherein the first recirculation circuit (21) comprises at least two lubricant inlets (1200) aligned along an axial direction parallel to an axis (A) of the bearing.

6. The bearing according to one of the preceding claims, wherein the first recirculation circuit (21) comprises a series of pairs of lubricant inlets (1200) located at the level of the second raceway (124) and a series of pairs of ducts (120, 166) associated with said lubricant inlets (1200), the pairs of ducts (120, 166) being evenly distributed around an axis (A) of the bearing, and the ducts (120, 166) of each pair extending substantially in a same plane (P2) passing through this axis (A).

7. The bearing according to one of the preceding claims, wherein the first recirculation circuit (21) comprises at least two ducts (120, 166) created in the external ring (4) and which extend on either side of a median plane (P1) of the bearing, perpendicular to said axis (A) and passing substantially in the middle of the bearing.

8. The bearing according to claim 6 or 7, wherein the ducts (120, 166) of each pair are symmetrical with respect to a median plane (P1) perpendicular to said axis (A) and passing substantially in the middle of the bearing.

9. The bearing according to one of the preceding claims, wherein each duct (120, 166) of the first recirculation circuit (21) comprises a first portion (120) extending radially outwardly from the lubricant inlet (1200) and extended by a second portion (166) which progresses mainly towards an axis (A) of the bearing, this second portion (166) leading to the lubricant outlet (1661) which opens onto the second recirculation circuit (22).

10. The bearing according to the preceding claim, wherein the lubricant outlet (1661) is engaged in a lubricant inlet manifold of the second recirculation circuit (22) formed by an annular recess (157) of the internal ring (3), said annular recess (157) having a bottom which opens out into at least one duct (152) of the second recirculation circuit (22).

11. The bearing according to any of the preceding claims, wherein the rolling-elements (13) are rollers, in particular cylindrical.

12. The bearing according to one of the preceding claims, wherein the bearing comprises sealing systems (17) between the internal (3) and external (4) rings, on either side of said rolling-elements (13).

13. The bearing according to one of the preceding claims, wherein the internal ring (3) or at least one element (151) rotationally integral with the internal ring (3) comprises annular ribs (155) for guiding lubricant by centrifuging towards said lubricant inlet (1200), said annular ribs (155) extending on both sides of the rolling-elements (13) towards the external ring (4).

14. A turbomachine, in particular for an aircraft, comprising at least one bearing according to one of the preceding claims, and wherein the internal ring (3) of the bearing is rotationally integral with a rotary shaft of the turbomachine while the external ring (4) is attached to a stator portion of the turbomachine.
